Europäisches Patentamt

European Patent Office

Office européen des brevets

(11) Veröffentlichungsnummer: **0 448 825 A2**

## (12) EUROPÄISCHE PATENTANMELDUNG

(21) Anmeldenummer: 90124998.7

(22) Anmeldetag: 20.12.90

(51) Int. Cl.5: **C08G 18/10, C08G 18/42, C09J 175/06**

(30) Priorität: 23.03.90 DE 4009311
24.05.90 DE 4016717

(43) Veröffentlichungstag der Anmeldung:
02.10.91 Patentblatt 91/40

(84) Benannte Vertragsstaaten:
BE DE ES FR GB IT NL SE

(71) Anmelder: BAYER AG

W-5090 Leverkusen 1 Bayerwerk(DE)

(72) Erfinder: Hänsel, Eduard, Dr.
Espenstrasse 2
W-5600 Wuppertal-Elberfeld(DE)
Erfinder: Meckel, Walter, Dr.
Zonserstrasse 9
W-4040 Neuss(DE)
Erfinder: König, Klaus, Dr.
Zum Hahnenberg 40
W-5068 Odenthal(DE)
Erfinder: Ganster, Otto, Dr.
Droste-Hülshoff-Strasse 5
W-5068 Odenthal(DE)
Erfinder: Stepanski, Horst, Dr.
Raushofstrasse 20
W-5090 Leverkusen 3(DE)

(54) Schmelzklebeverfahren.

(57) Die Erfindung betrifft ein Klebeverfahren, bei dem ein Prepolymer auf Basis eines Dodecandisäureesters und eines Diisocyanates mittels eines Spinnsprühprozesses aufgetragen wird.

Rank Xerox (UK) Business Services

Die Erfindung betrifft ein spezielles Verfahren zum Verkleben von Oberflächen mit speziellen Schmelzkleberzusammensetzungen.

Klebeverfahren mit lösungsmittelfreien, 100 % Feststoff enthaltenden Klebstoffsystemen gewinnen in der heutigen Zeit immer mehr an Bedeutung, da die Verwendung von lösungsmittelhaltigen Systemen aufwendige Lösungsmittelrückgewinnungsanlagen erfordert, und die Verwendung von wäßrigen Dispersions- oder Lösungssystemen eine Abdunstung des Wassers erfordert, was ebenfalls unter Umständen sehr kostenintensiv ist. Als technische Alternative bieten sich Schmelzklebstoffe an, die seit langem bekannt sind. Ihre Vorteile bestehen darin, daß sie, als heiße Schmelzen aufgetragen, rasch beim Abkühlen erstarren und damit Festigkeit aufbauen. Ein Nachteil besteht darin, daß bedingt durch die hohen Schmelztemperaturen das Verkleben von temperaturempfindlichen Substraten erschwert ist, da die Klebstoffschicht, wenn sie nicht sofort weiterverarbeitet wird, durch die rasche Kristallisation in einen nicht mehr benetzenden Zustand übergeht, der nur noch unter extremen Temperaturbedingungen thermisch aktiviert werden kann, und außerdem der Verbund, bedingt durch den thermoplastischen Charakter des Hotmelts eine begrenzte Wärmestandfestigkeit aufweist

Aus der DE-PS 878 827 ist bereits ein Klebeverfahren bekannt, bei dem ein in Methylenchlorid gelöster Ester mit Isocyanatgruppen auf eine Oberfläche aufgetragen wird und der Auftrag unter Kettenverlängerung gelagert wird. Anschließend wird die Oberfläche mit der anderen zu verklebenden Oberfläche zusammengefügt wobei nach Anlegen eines geringen Druckes und einer Lagerung oberhalb 30°C eine hochelastische Verklebung erfolgt. Statt der Verwendung eines gelösten Schmelzklebstoffes ist es gemäß dieser Patentschrift auch möglich ohne Lösungsmittel zu arbeiten. Ein Schmelzklebeverfahren ohne Verwendung eines Lösungsmittels wird ausdrücklich beansprucht in der DE-A-2 609 266. Hierin wird ein Fügeverfahren mit reaktiven Hotmeltsystemen auf Basis von isocyanathaltigen Prepolymeren aus Diisocyanaten und Polyesterdiolen mit Schmelzbereichen oberhalb 40°C beschrieben.

Auf Grund der niedrigen Molekulargewichte sind die Produkte bei Temperaturen wenig oberhalb des Schmelzbereiches der Polyester flüssig und verarbeitbar und erreichen nach einer auf dem Substrat ablaufenden Kettenverlängerungsreaktion ein ausreichendes Molekulargewicht, das zusammen mit der Rekristallisation der kristallinen Weichsegmente eine erhöhte Anfangsfestigkeit ergibt und die Endfestigkeiten durch vollständige Reaktion der noch vorhandenen freien Isocyanatgruppen mit beispielsweise Luftfeuchtigkeit unter Ausbildung von linearen, hochmolekularen Polyurethanpolyharnstoffen erreicht wird.

Bei den heute in der Industrie üblichen sehr raschen Taktzeiten stellt aber gerade die notwendige Vorverlängerung der isocyanathaltigen Prepolymeren einen schwer zu reproduzierenden Schritt dar der, wenn er nicht vollständig genug abläuft zu Fehlklebungen wegen zu niedriger Kohäsionsfestigkeit führt, und wenn er zu weit getrieben wird, die resultierende Klebstoffschicht wegen eines bereits zu hohen Molekulargewichts nicht mehr ausreichend aktivierbar ist.

Eine andere Möglichkeit der Herstellung von reaktiven Hotmelts wird in der EP-A 340 906 beschrieben, jedoch ist die Herstellung der Produkte durch die Verwendung von zwei Polyestern unterschiedlicher Glasübergangstemperaturen aufwendig, und die Viskositäten der Produkte sind wegen der höheren Glaspunkte höher und erfordern deshalb für eine gute Benetzung der Substrate eine höhere Verarbeitungstemperatur. Daneben ist das dosierte Aufbringen der Schmelzklebstoffe ein Problem.

Aus der EP-A-0 354 527 sind zwar bereits Schmelzklebstoffe auf Basis von teilkristallenen Polyestern und Polyisocyanaten bekannt, allerdings ohne Hinweis auf brauchbare Aufbringungsverfahren.

Der Auftrag des geschmolzenen Klebstoffs über Walzen ist zwar möglich, führt aber wegen der Reaktivität der Isocyanatgruppen mit Luftfeuchtigkeit mit der Zeit zu Anbackungen, die sich insbesondere bei längeren Maschinenstandzeiten nur noch sehr schwer wieder entfernen lassen.

Sehr viel besser geeignet sind Sprühverfahren, die die Handhabung der geschmolzenen Isocyanat-reaktiven Schmelzklebstoffe unter Feuchtigkeitsausschluß erlauben, wobei die Luftfeuchtigkeit erst nach Auftrag des Schmelzklebstoffs auf die zu verklebende Oberfläche zutreten kann. Für ein einwandfreies Spritzbild müssen die Klebstoffe jedoch bestimmte rheologische Bedingungen erfüllen.

Wünschenswert ist deshalb ein technisch einfach zu realisierendes Fügeverfahren, welches auch unter ungünstigen Bedingungen eine schnelle Maschinentaktzeit erlaubt und trotzdem mit relativ niedrig schmelzenden und bei moderaten Temperaturen zu aktivierenden Klebstoffen abläuft.

Gegenstand der Erfindung ist ein Verfahren zum Verkleben von Oberflächen mit einem Isocyanatgruppen aufweisenden Prepolymeren auf Basis wenigstens eines Polyesterdiols und wenigstens eines Diisocyanates bei dem das Prepolymere als Schmelzklebstoff auf wenigstens eine der zu verbindenden Oberflächen aufgebracht wird, dadurch gekennzeichnet, daß

a) das Polyesterdiol aufgebaut ist auf Basis von Dodecandisäure ($HO_2C$-$(CH_2)_{10}$-COOH) und wenigstens eines geradzahligen Diols mit wenigstens 6 C-Atomen

b) das Prepolymere einen Isocyanatgruppengehalt von höchstens 1,8 Gew.-% bezogen auf das gesamte

2

Prepolymere aufweist

c) das Prepolymere ein mittleres Molekulargewicht $\overline{MG}_n$ von mindestens 4.500 aufweist und

d) der Auftrag der Prepolymeren auf mindestens eine Oberfläche über einen Spinnsprühprozeß erfolgt und diese Oberfläche sofort anschließend mit der anderen zu verklebenden Oberfläche in innigen Kontakt zwecks Verklebung gebracht werden kann.

Unter einem Spinnsprühprozeß wird verstanden, daß der aus eine Applikationsdüse austretende fadenförmige Klebstoff durch gezielte Verwirbelung, insbesondere durch Druckluft, in eine spiralförmige Bewegung versetzt wird. Dadurch erfolgt der Auftrag spiralförmig, mit gleichmäßiger Fadenstärke und einstellbarer Schlingendichte.

Klebstoffe dieser Art lassen sich überraschend ohne Schwierigkeiten zu einem vliesartigem Gebilde verspritzen, leicht thermisch aktivieren, sofern zwischen Auftrag und Aktivieren kein zu großer Zeitraum liegt; vor allem wird durch die erfindungsgemäßen Klebstoffe eine hohe Maschinentaktzeit erreicht, da die Verbunde eine hohe Anfangsfestigkeit aufweisen. Als Diol werden Dodecandiol oder insbesondere 1,6-Hexandiol bevorzugt. Das Molekulargewicht des Hydroxylpolyesters liegt im allgemeinen zwischen 1500 und 8000, insbesondere zwischen 4000 und 6000.

Das Verhältnis von isocyanatreaktiven Gruppen in den Polyolkomponenten und den Isocyanatgruppen in den Diisocyanaten kann in weiten Grenzen variiert werden. Generell sollte das Verhältnis von Isocyanatgruppen und isocyanatreaktiven Gruppen zwischen 2,8:1 und 1,2:1, vorzugsweise zwischen 2,1:1 und 1,4:1 liegen.

Wesentlich ist jedoch, daß der Gehalt an freien Isocyanatgruppen bezogen auf die Reaktionskomponenten kleiner 1,8 Gew.-% beträgt, das heißt, wenn das Molekulargewicht des Polyesters ca. 2000 beträgt, so sollte das Verhältnis der Isocyanatgruppen des Polyisocyanats zu den Hydroxylgruppen des Polyesters bei ca. 1,5:1 liegen, während bei einem Molekulargewicht des Polyesters von 5500 das Verhältnis bei ca. 2,3:1 liegen kann.

Die Herstellung der Polyester erfolgt nach konventionellen Methoden durch Schmelzkondensation der Dicarbonsäuren mit einem Überschuß der Diolkomponente bei Temperaturen von 180 bis 280° C. Es können selbstverständlich auch Katalysatoren oder Schleppmittel, wie beispielsweise Toluol mitverwendet werden.

Selbstverständlich kommt als Herstellmethode auch die Umesterung von Dicarbonsäureestern mit beispielsweise Hexandiol-1,6 in Betracht.

In geringen Mengen können auch niedermolekulare Diole wie insbesondere Di-, tri- und/oder Tetraethylenglykol, 1,4-Dimethylolcyclohexan oder Umsetzungsprodukte von 4,4'-Hydroxyphenylpropan mit Ethylen- und/oder Propylenoxid oder für besondere Effekte auch Diole mit Ionen und/oder ionengruppenhaltigen Bausteinen, wie beispielsweise Dimethylolpropionsäure, N-Methyldiethanolamin und/oder Umsetzungsprodukte von Natriumbisulfit und propoxyliertem Butendiol-1,4 mitverwendet werden. Wenn ein gewisser Verzweigungsgrad gewünscht wird, so können geringe Anteile von trifunktionellen Polyolen, wie beispielsweise Trimethylolpropan mitverwendet werden.

Als Polyisocyanate kommen alle im wesentlichen bifunktionellen Polyisocyanate, wie beispielsweise Hexamethylendiisocyanat, 4,4'-Dicyclohexylmethandiisocyanate, Toluylendiisocyanate, Diphenylmethandiisocyanate und/oder auch methylgruppensubstituierte Diphenylmethandiisocyanate, vorzugsweise aber 4,4'-Diphenylmethandiisocyanat mit bis zu 80 % 2,4-Diphenylmethandiisocyanat in Betracht.

In Mengen von 0,1 bis 5 Gew.-% können insbesondere polyfunktionelle aliphatische Isocyanate, die sich beispielsweise durch Trimerisierung oder Biuretisierung von Hexamethylendiisocyanat ableiten, mitverwendet werden.

Die Herstellung der Isocyanatgruppen enthaltenden Hotmeltsysteme erfolgt beispielsweise derart, daß die flüssigen Polyole gemischt und mit einem Überschuß der Polyisocyanate vermischt werden und die homogene Mischung abgefüllt wird oder bis zum Erhalt eines konstanten NCO-Wertes gerührt wird und dann abgefüllt wird. Als Reaktionstemperatur werden 70 bis 150, vorzugsweise 80 bis 110° C gewählt. Selbstverständlich kann die Herstellung der reaktiven Hotmelts auch kontinuierlich in einer Rührkesselkaskade oder geeigneten Mischaggregaten, wie beispielsweise schnelldrehenden Mischern nach dem Rotor-Stator-Prinzip erfolgen.

Es ist selbstverständlich möglich, die Polyester oder einen Teil derselben mit einem Unterschuß von Diisocyanaten, vorzugsweise Hexamethylendiisocyanat zu modifizieren und nach beendeter Reaktion die urethangruppenhaltigen Polyesterdiole eventuell mit zusätzlichen urethangruppenfreien Polyestern mit einem Überschuß von Diisocyanaten zu einem Isocyanatgruppen enthaltenden Hotmelt umzusetzen.

Die Hotmeltsysteme sind, wenn sie unter Feuchtigkeitsausschluß bei Raumtemperatur bis 50° C gelagert werden, fast unbegrenzt haltbar. Sie können mit Füllstoffen wie beispielsweise Kreide, Schwerspat oder Polymerpulver wie z.B. PVC- oder ABS-Pulver, Farbstoffen, Harzen und/oder Streckölen modifiziert werden und stellen hervorragende Klebstoffe dar.

Die Applikation erfolgt bei erhöhter Temperatur, wobei die Hotmeltsysteme kontinuierlich oder diskontinuierlich bei Temperaturen von 80 bis 160° C aufgeschmolzen werden.

Das Aufbringen auf mindestens eine der zu verklebenden Flächen erfolgt erfindungsgemäß durch Verspinnen der heißen Schmelze mit einem heißen Luftstrom. Geeignete Maschinen befinden sich im Handel; so wird eine großtechnisch einsetzbare Maschine z.B. von der Firma Nordson angeboten. Mit solchen Maschinen lassen sich die Schmelzklebstoffe kontrolliert, flächendeckend und kantenscharf applizieren. Der Klebstoff wird vorzugsweise in einer Menge von 15 g bis 100 g/m$^2$ , insbesondere von 30 g bis 50 g/m$^2$ , aufgetragen.

Bedingt durch die rasche Kristallisation der Hotmelts können die klebstofftragende Teile für eine kurze Zeit ohne zu Verkleben gestapelt werden. Die Zeitspanne zwischen Aufbringen des Klebstoffs und dem Verkleben sollte allerdings nicht zu lange sein, da sonst Aktivierprobleme auftreten können. Die mögliche Zeitspanne liegt bei etwa 3 bis 5 Stunden und ist abhängig von den äußeren Bedingungen wie Temperatur und Luftfeuchtigkeit. Eine solche Zwischenlagerung ist aber in keiner Weise notwendig, und zeichnet die erfindungsgemäßen Klebstoffe gegenüber dem Stand der Technik, wie z.B. in DE-A 2 609 266 beschrieben aus, bei denen die Zwischenlagerung für einen weiteren Molekulargewichtsaufbau zwingend vorgegeben ist. Bevorzugt ist somit insbesondere ein kontinuierlicher Prozeß, bei dem nach Auftrag des Hotmelts nach dem Spinnsprühprozeß auf eine der zu verklebenden Flächen diese mit der anderen, eventuell vorgewärmten, Klebstoff-freien Fläche gefügt wird, und der Verbund unter Druck und eventueller Formgebung die Stufe zum fertigen Artikel durchläuft.

Die zu beobachtende Abbindung erfolgt wohl zunächst physikalisch durch Rekristallisation der Polyestersegmente und später bzw. simultan durch chemische Reaktion der Isocyanatgruppen mit Feuchtigkeit oder anderen zeriwitinoff aktiven Gruppen.

Normalerweise reicht die Substrat- und Luftfeuchtigkeit zur Abbindung aus, aber die Reaktion kann selbstverständlich durch zusätzliches Benebeln mit Wasser oder Glykolen und/oder Katalysatoren enthaltende Medien beschleunigt werden.

Die Produkte können als Klebstoffe für die verschiedensten Materialien wie Holz, Holz enthaltende Produkte, Glas, Keramik, Leder oder Kunststoffe, in massiver oder geschäumter Form wie beispielsweise PVC, PUR, ABS, Polyethylen oder Polypropylen mit sich selbst oder untereinander vielfältig eingesetzt werden. Die Klebstoffe können für die verschiedensten Einsatzgebiete verwendet werden, wie beispielsweise als Montageklebstoff zur vorläufigen Fixierung von Bauteilen, als Buchbindeklebstoff, wo durch die rasche Kristallisation ein früher Festigkeitsaufbau erreicht wird, der eine schnelle Taktzeit auf den gängigen Buchbindemaschinen erlaubt oder zur rationellen Herstellung von flächigen Verbunden die sofort nach dem Verkleben unter hohen Spannungen stehen und deshalb einen Klebstoff mit sich rasch aufbauender, hoher Anfangsfestigkeit benötigen wie beispielsweise bei der Sohlenverklebung, der Möbelfertigung oder bei der Herstellung von Hutablagen oder anderen Innenteilen von Kraftfahrzeugen.

Beispiele

Polyesterpolyole

A-1    Hydroxylpolyester aus Dodecandisäure und Hexandiol-1,6
       MG 4400    Hydroxyzahl 25,3
       EP: 73° C

A-2    Hydroxylpolyester aus Dodecandisäure und Dodecandiol
       MG 4800    Hydroxyzahl 23,4
       EP: 83° C

A-3    Hydroxypolyester aus Dodecandisäure und Hexandiol-1,6
       MG 1950    Hydroxyzahl 57,5
       EP: 73° C

A-4    Hydroxylpolyester aus 2 Mol Polyester A-3 und 1 Mol
       Diisocyanat C-2
       MG 4070    Hydroxyzahl 27,5
       EP: 73° C

A-5    Hydroxylpolyester aus Adipinsäure und Hexandiol-1,6
       MG 4070    Hydroxyzahl 27,4
       EP: 57° C

A-6    Hydroxylpolyester aus Sebazinsäure und Butandiol-1,4

MG 1970   Hydroxyzahl 57,1
EP: 64° C
EP: Erweichungspunkt gemessen mit DuPont 910 Differential Scanning-Calorimeter (Aufheizrate 5° C/Min.)
MG:   Molekulargewicht

Diisocyanate

C-1   4,4'-Diisocyanatodiphenylmethan
C-2   Hexamethylendiisocyanat
C-3   Trimerisiertes Hexamethylendiisocyanat NCO-Wert 22,5 %

Herstellung der Prepolymere

Die geschmolzenen Polyesterpolyole werden gemischt und für 60 Miuten bei 100° C bei ca. 20 mmHg unter Rühren entwässert. Bei ca. 80-90° C wird das Diisocyanat zugegeben und bis zur Konstanz des Isocyanatgehaltes unter Stickstoff gerührt.
Das Prepolymer wird in Kartuschen abgefüllt.

Untersuchung der Hotmeltsysteme

Nach zweiwöchiger Lagerung bei Raumtemperatur werden die Kartuschen für 60 Minuten bei 130-140° C im Wärmeschrank aufgeschmolzen.
Von dem flüssigen Prepolymer wird der Isocyanatgehalt durch Titration mit Dibutylamin bestimmt.
Die Hotmelts werden aus der Kartusche mittels Spritzpistole (Beyer & Otto, Kleinosthiem) auf 25 mm breite Prüfkörper aus Limba-Sperrholz (4 mm dick) in Form eines Spinnvlieses aufgetragen. Eine 1,8 mm dicke PVC-Folie wird in einen Rahmen gespannt und 4 Minuten in einem auf 130° C temperiertem Umlufttrockenschrank temperiert. Die im Rahmen eingespannte Folie wird anschließend sofort auf den kalten (RT) Holzprüfkörper aufgelegt und 20 Sek. lag in einer auf 35° C temperierten pneumatischen Presse verpreßt und nach 1 Minute ein 180°-Schälversuch (Vorschubgeschwindigkeit 100 mm/Min. in Anlehnung an ASTM D 903-49) durchgeführt.

NCO-Prepolymere

| | Polyol (g) | Diisocyanat (g) | NCO-Wert (%) | Viskosität bei 120° C (Pas) |
|---|---|---|---|---|
| 1 | 1000 A-1 | 99,4 C-1 | 1,22 | 11,0 |
| 2 | 1000 A-2 | 104,2 C-1 | 1,49 | 13,4 |
| 3 | 1000 A-4 | 116,7 C-1 | 1,60 | 14,0 |
| 4 | 1000 A-1 | 99,4 C-1 | 1,41 | 10,8 |
| | | 10,0 C-3 | | |
| 5 | 1000 A-3 | 256,0 C-1 | 3,25 | 6,4 |
| 6 | 1000 A-5 | 122,0 C-1 | 1,75 | 8,5 |
| 7 | 1000 A-6 | 222,0 C-1 | 2,30 | 7,5 |

Die Beispiele 1 bis 4 sind erfindungsgemäß.
Beispiel 7 entspricht Beispiel 6 aus der DE-A-2 609 266.

Klebverhalten der NCO-Prepolymere

| | Spritzverhalten | Anfangsfestigkeit nach 1 Minute (N/cm) |
|---|---|---|
| 1 | sauberes Spinnvlies | 3 |
| 2 | sauberes Spinnvlies | 4 |
| 3 | sauberes Spinnvlies | 4 |
| 4 | sauberes Spinnvlies | 4 |
| 5 | tropfenartiges Spritzbild | 3 |
| 6 | sauberes Spinnvlies | kein Verbund |
| 7 | tropfenartiges Spritzbild | kein Verbund |

**Patentansprüche**

1. Verfahren zum Verkleben von Oberflächen mit einem Isocyanatgruppen aufweisenden Prepolymeren auf Basis wenigstens eines Polyesterdiols und wenigstens eines Diisocyanates, bei dem das Prepolymere als Schmelzklebstoff auf wenigstens eine der zu verbindenden Oberflächen aufgebracht wird, dadurch gekennzeichnet, daß

a) das Polyesterdiol aufgebaut ist auf Basis von Dodecandisäure und wenigstens eines geradzahligen Diols mit wenigstens 6 C-Atomen

b) das Prepolymere einen Isocyanatgruppengehalt höchstens 1,8 Gew.-% bezogen auf das gesamte Prepolymere aufweist und

c) das Prepolymere ein mittleres Molekulargewicht $\overline{M}G_n$ von mindestens 4.500 aufweist und

d) der Auftrag der Prepolymeren auf mindestens eine Oberfläche über einen Spinnsprühprozeß erfolgt und diese Oberfläche sofort anschließend mit der anderen zu verklebenden Oberfläche in innigen Kontakt zwecks Verklebung gebracht werden kann.

2. Fügeverfahren nach Anspruch 1, dadurch gekennzeichnet, daß das Polyesterdiol aus Dodecandisäure und Hexandiol-1,6 aufgebaut ist.

3. Fügeverfahren nach Anspruch 1 und 2, dadurch gekennzeichnet, daß das Verhältnis von Isocyanatgruppen zu isocyanatreaktiven Gruppen im Prepolymeren zwischen 2,1:1 und 1,4:1 liegt.

4. Fügeverfahren nach Anspruch 1 bis 3, dadurch gekennzeichnet, daß als Diisocyanat Diphenylmethandiisocyanate verwendet werden.

5. Fügeverfahren nach Anspruch 1 bis 4, dadurch gekennzeichnet, daß das Polyesterdiol ein Molekulargewicht von 4000 bis 7000 aufweist.

6. Fügeverfahren nach Anspruch 1 bis 5, dadurch gekennzeichnet, daß der Klebstoff durch ein Spinnvliesverfahren auf das Fügeteil aufgebracht wird.

7. Fügeverfahren nach Anspruch 1 bis 6, dadurch gekennzeichnet, daß eine vorgewärmte, klebstofffreie Oberfläche unter Druck und eventueller Formgebung mit der klebstofftragenden Oberfläche in Kontakt gebracht wird.